# FASCICULE DE BREVET EUROPEEN

(11) **EP 1 716 670 B1**
(45) Date de publication et mention de la délivrance du brevet: **27.02.2008**
(21) Numéro de dépôt: 05726419.4
(22) Date de dépôt: 10.02.2005
(51) Int. Cl.: H04L 12/40

(54) **PASSERELLE ET SYSTEME DE TRANSMISSION DE DONNEES POUR RESEAU DE DIAGNOSTIC DE VEHICULE AUTOMOBILE**
GATEWAY UND DATENÜBERTRAGUNGSSYSTEM FÜR DAS DIAGNOSTISCHE NETZWERK EINES KRAFTFAHRZEUGS
GATEWAY AND DATA TRANSMISSION SYSTEM FOR A MOTOR VEHICLE DIAGNOSTIC NETWORK

(30) Priorité: 10.02.2004 FR 0401287
(43) Date de publication de la demande: 02.11.2006
(73) Titulaire: Renault Technocentre, 78288 Guyncourt (FR)
(72) Inventeur: MICHARD, Gilles, F-92310 Sèvres (FR); ABADIE, Eric, F-78480 St Rémy les Chevreuse (FR)
(74) Mandataire: Guyon, Rodolphe C.
(86) Numéro de dépôt international: PCT/FR2005/050086
(87) Numéro de publication internationale: WO 2005/079010

(56) Documents cités:
- EP-A- 1 198 103
- EP-A- 1 244 252
- US-A1- 2003 093 727
- US-A1- 2003 149 715

## Description

La présente invention concerne l'échange d'informations de diagnostic sur un réseau de diagnostic d'un véhicule automobile, tel qu'un réseau de type CAN (de l'anglais « Controller Area Network »).

Les réseaux de diagnostic comportent classiquement un ensemble de dispositifs émetteurs de données de diagnostic qui communiquent avec un ensemble correspondant de dispositifs récepteurs.

Les informations circulant sur ce réseau transitent parfois par des passerelles qui connectent le réseau à des sous-réseaux. Ces passerelles sont installées sur le bus du réseau, entre un émetteur et un récepteur de données.

Les informations de diagnostic véhiculées sur un tel réseau permettent d'identifier un défaut ou un mauvais fonctionnement d'un système embarqué à bord d'un véhicule automobile grâce à l'analyse des temps de transmission entre un émetteur et un récepteur.

On connaît, par la demande de brevet US 2003093727, un dispositif de diagnostic et de correction d'erreurs, comprenant un bloc de contrôle de bus pourvu d'un récepteur pour l'enregistrement des signaux qui circulent sur le bus de données et des moyen pour détecter les erreurs de communication ou pour compenser les erreurs contenues dans les informations transmises. Le dispositif est connecté à l'interconnexion centrale de bus formant ainsi une passerelle. En outre, un bloc de diagnostic est intégré à la passerelle pour contrôler la régularité des corrections du bloc de contrôle de bus.

Un tel dispositif ne prend pas en compte le temps de transmission d'un flux de données et ne prévoit donc pas d'améliorer le débit de transmission de données en raison de la durée non négligeable des temps de transfert au sein du dispositif. En effet, la présence d'une passerelle allonge considérablement le temps de transmission d'un flux de données de l'émetteur au récepteur. Ce temps est d'autant plus long que le message est important.

Le document EP-1244252 décrit une passerelle connectant un premier et un deuxième réseaux ayant différentes caractéristiques pour assurer un échange d'informations entre les deux réseaux. La passerelle envoie et reçoit d'une part un message qui est transmis périodiquement, et d'autre part un message transmis en réponse à un évènement, à une requête ou encore à une demande. Le dispositif décrit reçoit des messages du premier réseau, les stocke puis les délivre au second réseau à la réception d'un évènement lié au changement d'une valeur dite message.

Le document US-2003/149715 décrit un dispositif appelé noeud de communication capable d'agir sur le mode de communication dans le cas d'un protocole TCP. Dans le cas du mode dit de reconnaissance anticipée (« early anticipation »), le noeud de communication transmet des messages de reconnaissance anticipée pour des datagrammes qui n'ont pas encore atteint le noeud, de façon à éviter la saturation de la mémoire du noeud de communication. Ces messages anticipés sont associés aux messages transmis par le réseau mais ne sont pas similaires à ces derniers.

La présente invention a pour but de fournier un passerelle et système de transmission de données améliorés pour réseau de diagnostic de véhicule automobile. La présente invention a aussi pour but de palier certains inconvénients des systèmes connus et de réduire le temps de transfert à une valeur proche du temps de transfert en l'absence de passerelle de transmission et de rendre ce temps indépendant de la longueur du message et du nombre de passerelles traversées.

À cet effet, l'invention concerne une passerelle de transmission de données pour un réseau de diagnostic de véhicule automobile (CAN), destinée à être installée sur un bus du réseau de diagnostic entre un émetteur et un récepteur de données. Cette passerelle comporte des moyens d'émission d'un flux de données simulé, identique à un flux de données envoyé par le récepteur, en réponse au flux de données émis par l'émetteur et transmis par la passerelle.

L'envoi de ce message fictif par la passerelle permet de simuler le contrôle de flux émis par le destinataire, par exemple un calculateur, avant que celui-ci ne l'ait reçu. Le flux de données simulé par la passerelle vers l'émetteur permet à ce dernier d'émettre la suite du message à transmettre. Ainsi on minimise les temps d'attente de recopie et de réponse des sous-réseaux.

Par ailleurs, afin de transmettre simultanément le flux de données simulé vers l'émetteur et le flux de données correspondant au message à transmettre au récepteur, la passerelle comporte des moyens de synchronisation.

Selon une variante de l'invention, la passerelle de transmission de flux de données peut être intégrée dans un boîtier électronique dédié à la fonction de passerelle.

En variante, la fonction réalisée par la passerelle de transmission de flux de données peut être implémentée au sein d'un calculateur électronique abritant d'autres fonctions.

L'invention a également pour objet un système de transmission de messages de diagnostic comprenant au moins une passerelle de transmission destinée à être installée sur un bus d'un réseau de diagnostic (CAN) d'un véhicule automobile, un émetteur et un récepteur installés sur ce bus. De plus la passerelle comporte un système d'émission d'un flux simulé identique au flux de données émis par l'émetteur, et transmis par la passerelle à l'émetteur, ce flux de données simulées étant émis en même temps que le flux transmis de l'émetteur vers le récepteur par la passerelle.

Enfin, selon encore un autre aspect, l'invention à pour objet un procédé de transmission de messages de diagnostic (CAN) dans un réseau de diagnostic d'un véhicule automobile au moyen d'une ou plusieurs passerelles de transmission installées sur un bus du réseau de diagnostic (CAN), qui comporte les étapes suivantes :
- émission des données d'un émetteur vers la passerelle,
- transmission des données de la passerelle vers un récepteur, et
- émission, simultanément à l'étape de transmission des données de la passerelle vers le récepteur, d'un flux de données simulé identique à un flux de données envoyé par le récepteur en réponse au flux de données transmis par l'émetteur.

Selon un mode de mise en oeuvre, le procédé de la transmission des trames constituant les messages de diagnostic de véhicule automobile, comporte les étapes consistant à :
- émettre chaque flux correspondant à la trame n du message du récepteur, vers la passerelle située entre l'émetteur et le récepteur ;
- attendre la réponse vraie à la trame n-1 envoyée par le récepteur à la passerelle, sauf pour la première trame, et
- dès sa réception, envoyer une réponse simulée de la trame n, de la passerelle vers l'émetteur et transmettre en parallèle la trame n vers le récepteur, ladite réponse simulée constituant une simulation de la trame n.

Le procédé de transmission de message de diagnostic procède à l'envoi du message par trames successives de 7 octets jusqu'à la fin du message.

D'autres avantages et caractéristiques de l'invention apparaîtront à l'examen de la description détaillée d'un mode de réalisation de l'invention nullement limitatif, et des dessins annexés, sur lesquels :
- la figure 1 est un schéma synoptique d'un passerelle de transmission de données ; et
- la figure 2 illustrant le procédé de transmission de données selon l'invention.

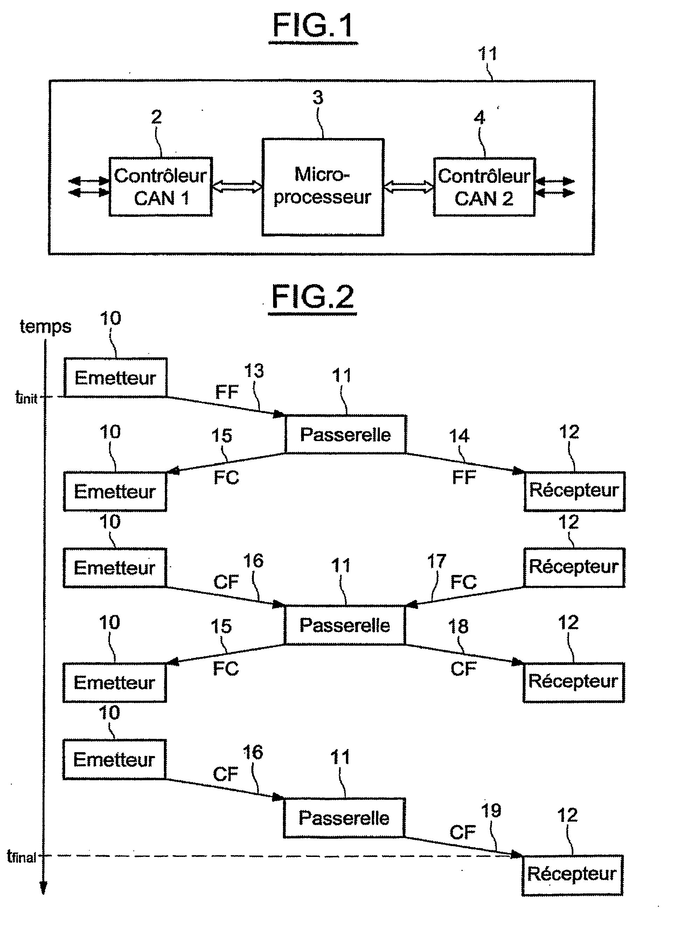

Sur la figure 1, on a représenté le schéma fonctionnel d'une passerelle 11 de transmission de données pour réseau de diagnostic de véhicule automobile (CAN). Cette passerelle comprend des premier et deuxième contrôleurs CAN par lesquels elle communique avec le réseau CAN. La passerelle 11 comprend également un micro-processeur 3, qui communique avec les contrôleurs 2 et 4.

En se référant également à la figure 2, sur laquelle on a représenté l'évolution en fonction du temps d'une portion d'un système de transmission de messages de diagnostic auquel appartient la passerelle de la figure 1, le premier contrôleur CAN1 2 est destiné à recevoir des messages incidents en provenance d'un émetteur 10 distant, constitué par un outil de diagnostic du véhicule, et également à transmettre des messages vers cet outil 10.

Le deuxième contrôleur CAN2 4 se charge de l'envoi des messages reçus vers un récepteur distant, constitué par un calculateur 12, et également de recevoir des messages en provenance de ce calculateur.

Le système de transmission de messages de diagnostic auquel appartient la passerelle comporte en effet un ensemble d'émetteurs 10 et de récepteurs 12 correspondant connectés en réseau sur le réseau CAN du véhicule. Ces émetteurs et récepteur communiquent entre eux grâce à des bus de transmission de données sur lesquels sont placées les passerelles 11. Les échanges de données entre un émetteur 10 et un récepteur 12 correspondant s'effectuent sous la forme de trames successives de données de diagnostic.

Ce système peut comporter plusieurs bus de transmission de données fonctionnant en parallèle et associés chacun à plusieurs passerelles 11.

L'association de deux ou plusieurs passerelles 11 n'entraîne pas de modifications de celles-ci. Chacune travaille comme si elle était isolée. Par ailleurs cette association de plusieurs passerelles a peu d'impact sur les performances.

Le micro-processeur 3 est dûment programmé de manière à émettre, conjointement avec le premier contrôleur CAN1, un message simulé vers l'émetteur 10, en synchronisme avec la retransmission, vers le récepteur 12, d'un message de diagnostic incident reçu en provenance de cet émetteur.

En particulier, de manière à gérer les temps morts de transmission, la passerelle 11 va chercher à utiliser au maximum les capacités de charge des bus. De cette façon, on accélère la transmission des données pour un résultat proche d'une transmission sans passerelle.

Pour cela, la passerelle 11 de transmission de données comporte des moyens d'émission d'un flux simulé 15. Un tel flux est identique au flux de données 17 envoyé par le récepteur 12 en réponse au flux de donnée 13, 14, 16, émis par l'émetteur 10.

En effet, la réponse du destinataire 12 est connue par avance. La passerelle 11 peut donc l'envoyer à l'émetteur 10 avant de la recevoir. Ainsi, comme on le voit sur la figure 2 qui illustre les échanges de messages sur un bus de transmission de données entre l'émission d'un première trame 13 et celle d'une dernière trame 19 et sur laquelle les flèches représentent les transmission de trames entre un émetteur et un récepteur, en passant par une passerelle, la transmission d'un message comporte plusieurs étapes.

Lors de la première étape, des données de diagnostic sont émises de l'émetteur 10 vers la passerelle 11 sous la forme d'un premier message 13. Ces données sont alors transmises de la passerelle 11 vers le récepteur 12. Simultanément à la transmission des données de la passerelle 11 vers le récepteur 12, le micro-processeur 3 et le contrôleur 2 provoquent l'émission, à destination de la passerelle puis de l'émetteur 10, d'un flux de données simulé 15 qui correspond à la réponse FC 17 récepteur 12. Cette réponse fictive est ainsi transmise à l'émetteur 10 avant même qu'elle soit émise par le récepteur.

En outre, l'invention fonctionne en utilisant le découpage des messages de diagnostic selon une variante du protocole dit « diagnostic on CAN ». Cette variante utilise une taille de bloc BS égale à 1. En d'autres termes, pour chaque trame émise par l'émetteur 10, une trame doit être envoyée en réponse par le destinataire vers la passerelle.

Selon ce découpage, un message est découpé de manière à former les trames suivantes :
- SF (Trame Unique, « Single Frame », en anglais) : il s'agit d'un message de 7 octets entièrement contenu dans une trame CAN dont le premier octet est de la forme 0x ;
- FF (Première Trame, « First Frame », en anglais) : il s'agit d'un début d'un message qui commence par 1xyz, où xyz est le nombre d'octets du message ;
- CF (Trame Consécutive « Consecutive Frame », en anglais) : cette trame correspond à une réponse du récepteur. Elle commence par 2x ;
- FC (Flux controlé « Flow Control », en anglais) : Cette trame correspond à une réponse simulée envoyée par la passerelle à l'émetteur. Elle commence par 3. Le deuxième octet est appelé BS et indique que chaque trame émise est acquittée par un FC.

Le message ainsi découpé est transmis entre un émetteur et un récepteur de la manière suivante.

Tout d'abord, une première trame 13, constituée par la trame FF résultant du découpage du message, est émise à tᵢₙᵢₜ. Pour cette première trame, la passerelle 11 transmet le flux de données émis 14 vers le récepteur 12 et élabore simultanément un flux 15 de données simulées FC qu'elle retransmet vers l'émetteur.

Pour une trame n d'un message CF 16, la passerelle attend la réponse du récepteur 12 qui est émise par ce dernier en réponse à la trame n-1. Puis, elle renvoie une réponse simulée FC 15 pour cette trame n, vers l'émetteur 10.

En ce qui concerne la dernière trame 19, le récepteur 12 n'envoie aucune réponse. De même, la passerelle 11 n'envoie aucun message simulé.

On notera qu'au cours de la transmission de ces messages, la passerelle 11 contrôle le nombre de messages FC 17 qu'elle reçoit. Elle s'assure ainsi qu'une seule trame est émise en avance, ce qui lui évite de disposer de circuits tampons importants.

Dans l'exemple de réalisation décrit précédemment, le découpage des messages a été effectué en utilisant une série de blocs BS égale à 1.

Il est également possible, en variante, d'utiliser une taille de bloc supérieure à 1. Dans ce cas, l'algorithme de la passerelle est complété de manière à conserver un mode de fonctionnement similaire à celui décrit précédemment en cachant à l'émetteur 10 que la taille de bloc réelle est différente de 1 de sorte que celui-ci se comporte de la même manière que si la taille de bloc était égale à 1.

Ainsi, dans le cas où le récepteur 12 souhaite que le découpage s'effectue selon une taille de bloc supérieure à 1, la transmission s'effectue selon le principe suivant.

Tout d'abord, une première trame FF 13 est émise de l'émetteur vers la passerelle 11.

En réponse, la passerelle 11 transmet un flux contrôlé FC 15 à l'émetteur 10 avec une variable BS positionnée à 1. Simultanément, elle transmet la première trame FF 14 au récepteur 12.

En réponse, le récepteur 12 transmet un flux contrôlé FC 17 à la passerelle 11 avec une variable BS positionnée à 2. A cet instant, une première trame consécutive 18 est reçue par la passerelle en provenance de l'émetteur 10.

La passerelle 11 retransmet alors, d'une part, une trame de flux contrôlé FC15 à l'émetteur 10 avec une taille de bloc égale à 1, et, d'autre part, la trame consécutive CF 18 au récepteur 12.

L'émetteur 10 envoie ensuite une deuxième trame consécutive 16. A l'expiration d'une période de temps STₘᵢₙ, la passerelle 11 retransmet la trame de flux contrôlé 15 à l'émetteur 10 avec une taille de bloc égale à 1 et retransmet également la trame consécutive 18 au récepteur 12.

Le processus se répète ainsi jusqu'à la dernière trame 19.

Comme on le conçoit, l'émetteur 10 ne voit que des trames pour lesquelles la taille de bloc est égale à 1.

Par ailleurs, aucune trame n'est émise avant de s'assurer préalablement qu'une ressource de réception est disponible.

On notera également que, selon le fonctionnement qui vient d'être décrit, la passerelle 11 doit procéder à un traitement additionnel lié à la valeur spécifique de la taille de bloc.

Cependant, le fait de gérer systématiquement la communication avec l'émetteur 10 en utilisant une taille de bloc égale à 1 libère la passerelle 1 de toute gestion ou de tout stockage temporaire de trame, et permet ainsi de compenser les inconvénients liés au traitement conditionné par une taille de bloc différente de 1.

## Revendications

1. Passerelle de transmission de données pour réseau de diagnostic de véhicule automobile en particulier de type, la passerelle (11) étant destinée à être installée sur un bus du réseau de diagnostic entre un émetteur (10) et un récepteur (12) de données, **caractérisée en ce qu'**elle comporte des moyens d'émission (3) d'un flux de données simulé, identique à un flux de données envoyé par le récepteur (12) en réponse au flux de données émis par l'émetteur (10) et transmis par la passerelle (11).

2. Passerelle selon la revendication 1, **caractérisée par le fait qu'**elle possède des moyens de synchronisation pour transmettre simultanément le flux de données simulé à l'émetteur et le flux de données au récepteur.

3. Passerelle selon l'une des revendications 1 et 2, **caractérisée par le fait que** ladite passerelle (11) est intégrée à un boîtier électronique dédié à la fonction de passerelle.

4. Passerelle selon l'une des revendications 1 et 2 **caractérisée en ce que** la fonction réalisée par ladite passerelle (11) est implémentée au sein d'un calculateur électronique abritant d'autres fonctions.

5. Système de transmission de messages de diagnostic comprenant au moins une passerelle (11) de transmission selon la revendication 1 destinée à être installée sur un bus d'un réseau de diagnostic d'un véhicule automobile, un émetteur (10) et un récepteur (12) installés sur ce bus, **caractérisé en ce que** ladite passerelle (11) comporte un système d'émission (3) d'un flux simule, identique au flux de données envoyé par le récepteur (12) en réponse au flux de données émis par l'émetteur (10) et transmis par la passerelle (11) à l'émetteur (10), ce flux de données simulé étant émis en même temps que le flux transmis de l'émetteur (10) vers le récepteur (12) par ladite passerelle (11).

6. Procédé de transmission de messages de diagnostic dans un réseau de diagnostic en particulier de type d'un véhicule automobile au moyen d'une ou plusieurs passerelles (11) de transmission installées sur un bus du réseau de diagnostic, comportant les étapes consistant à :
- émettre les données d'un émetteur (10) vers la passerelle (11),
- transmettre les données de la passerelle (11) vers un récepteur (12) ; et
**caractérisé en ce que**
- simultanément à l'étape de transmission des données de la passerelle (11) vers le récepteur (12), un flux de données simulé identique à un flux de données envoyé par le récepteur (12) est émis en réponse au flux de données transmis par l'émetteur (10).

7. Procédé de la transmission selon la revendication 6, **caractérisé en ce qu'**il comporte les étapes consistant à :
- émettre chaque flux (CF) correspondant à une trame n du message, du récepteur (12) vers la passerelle (11) située entre l'émetteur (10) et le récepteur (12) ;
- attendre la réponse vraie (17) à la trame n-1 envoyée par le récepteur (12) à la passerelle (11), sauf pour la première trame (FF), et
- dès réception de la réponse vraie, envoyer une réponse simulée (15), de la passerelle (11) vers l'émetteur (10) et transmettre en parallèle la trame n vers le récepteur (12), ladite réponse simulée constituant une simulation de la trame n.

8. Procédé de transmission selon l'une quelconque des revendications 6 à 7, **caractérisé en ce que** l'on procède à l'envoi du message par trames successives de 7 octets jusqu'à la fin du message.

## Claims

1. Data transmission gateway for a motor vehicle diagnostic network in particular of the CAN type, the gateway (11) being designed to be installed on a bus of the diagnostic network between a transmitter (10) and a receiver (12) of data, **characterized in that** it comprises means (3) for transmitting a simulated data stream, identical to a data stream sent by the receiver (12) in response to the data stream transmitted by the transmitter (10) and transmitted via the gateway (11).

2. Gateway according to Claim 1, **characterized in that** it has synchronization means for simultaneously transmitting the simulated data stream to the transmitter and the data stream to the receiver.

3. Gateway according to one of Claims 1 and 2, **characterized in that** the said gateway (11) is incorporated into an electronic module dedicated to the gateway function.

4. Gateway according to one of Claims 1 and 2, **characterized in that** the function performed by the said gateway (11) is implemented within an electronic computer hosting other functions.

5. Diagnostic message transmission system comprising at least one transmission gateway (11) according to Claim 1, designed to be installed on a bus of a motor vehicle diagnostic network, a transmitter (10) and a receiver (12) installed on this bus, **characterized in that** the said gateway (11) comprises a system (3) for transmitting a simulated data stream, identical to the data stream sent by the receiver (12) in response to the data stream transmitted by the transmitter (10) and transmitted via the gateway (11) to the transmitter (10), this simulated data stream being transmitted at the same time as the stream transmitted from the transmitter (10) to the receiver (12) via the said gateway (11).

6. Method for transmitting diagnostic messages in a motor vehicle diagnostic network in particular of the CAN type, by means of one or more transmission gateways (11) installed on a bus of the diagnostic network, comprising the steps consisting in:
- transmitting the data from a transmitter (10) to the gateway (11),
- transmitting the data from the gateway (11) to a receiver (12); and **characterized in that**, simultaneously with the step of transmitting the data from the gateway (11) to the receiver (12), a simulated data stream identical to a data stream sent by the receiver (12) is transmitted in response to the data stream transmitted by the transmitter (10).

7. Transmission method according to Claim 6, **characterized in that** it comprises the steps consisting in:
- transmitting each data stream (CF) corresponding to a frame (n) of the message from the receiver (12) to the gateway (11) situated between the transmitter (10) and the receiver (12);
- awaiting the true response (17) to the frame (n-1) sent by the receiver (12) to the gateway (11), except for the first frame (FF), and
- on receipt of the true response, sending a simulated response (15), from the gateway (11) to the transmitter (10) and transmitting the frame (n) in parallel to the receiver (12), the said simulated response forming a simulation of the frame (n).

8. Transmission method according to either one of Claims 6 and 7, **characterized in that** the message continues to be sent by successive frames of 7 bytes up to the end of the message.

## Patentansprüche

1. Datenübertragungs-Gateway für ein Diagnosenetzwerk eines Kraftfahrzeugs, wobei das Gateway (11) dazu bestimmt ist, auf einem Bus des Diagnosenetzwerks zwischen einem Sender (10) und einem Empfänger (12) von Daten installiert zu werden, **dadurch gekennzeichnet, dass** es Mittel (3) zum Senden eines simulierten Datenstroms aufweist, der gleich einem Datenstrom ist, der vom Empfänger (12) als Antwort auf den vom Sender (10) gesendeten Datenstrom gesendet und vom Gateway (11) übertragen wird.

2. Gateway nach Anspruch 1, **dadurch gekennzeichnet, dass** es Synchronisationsmittel aufweist, um gleichzeitig den simulierten Datenstrom an den Sender und den Datenstrom an den Empfänger zu senden.

3. Gateway nach einem der Ansprüche 1 und 2, **dadurch gekennzeichnet, dass** das Gateway (11) in eine Elektronikeinheit integriert ist, die der Gateway-Funktion gewidmet ist.

4. Gateway nach einem der Ansprüche 1 und 2, **dadurch gekennzeichnet, dass** die vom Gateway (11) ausgeführte Funktion in einem elektronischen Rechner implementiert ist, der andere Funktionen beherbergt.

5. System zur Übertragung von Diagnosemitteilungen, das mindestens ein Übertragungs-Gateway (11) nach Anspruch 1, das dazu bestimmt ist, auf einem Bus eines Diagnosenetzwerks eins Kraftfahrzeugs installiert zu werden, einen Sender (11) und einen Empfänger (10) aufweist, die auf diesem Bus installiert sind, **dadurch gekennzeichnet, dass** das Gateway (11) ein System (3) zum Senden eines simulierten Stroms gleich dem Datenstrom aufweist, der vom Empfänger (12) als Antwort auf den vom Sender (10) gesendeten Datenstrom gesendet und vom Gateway (11) an den Sender (10) übertragen wird, wobei dieser simulierte Datenstrom gleichzeitig mit dem vom Sender (10) zum Empfänger (12) über das Gateway (11) gesendeten Strom gesendet wird.

6. Verfahren zur Übertragung von Diagnosemitteilungen in einem Diagnosenetzwerk, insbesondere vom Typ CAN, eines Kraftfahrzeugs mittels eines oder mehrerer Übertragungs-Gateways (11), die auf einem Bus des Diagnosenetzwerks installiert sind, das die Schritte aufweist, die darin bestehen:
- die Daten eines Senders (10) zum Gateway (11) zu senden,
- die Daten vom Gateway (11) zu einem Empfänger (12) zu übertragen; und
**dadurch gekennzeichnet, dass**
- gleichzeitig mit dem Schritt der Übertragung der Daten vom Gateway (11) zum Empfänger (12) ein simulierter Datenstrom, der gleich einem vom Empfänger (12) gesendeten Datenstrom ist, als Antwort auf den vom Sender (10) übertragenen Datenstrom gesendet wird.

7. Übertragungsverfahren nach Anspruch 6, **dadurch gekennzeichnet, dass** es die Schritte aufweist, die darin bestehen:
- jeden Strom (CF), der einem Rahmen n der Mitteilung entspricht, vom Empfänger (12) zum Gateway (11) zu senden, das sich zwischen dem Sender (10) und dem Empfänger (12) befindet;
- auf die wahre Antwort (17) auf den Rahmen n-1 zu warten, der vom Empfänger (12) an das Gateway (11) gesendet wird, außer für den ersten Rahmen (FF), und
- bei Empfang der wahren Antwort, eine simulierte Antwort (15) vom Gateway (11) zum Sender (10) zu senden und parallel den Rahmen n zum Empfänger (12) zu übertragen, wobei die simulierte Antwort eine Simulation des Rahmens n bildet.

8. Übertragungsverfahren nach einem der Ansprüche 6 bis 7, **dadurch gekennzeichnet, dass** das Senden der Mitteilung in aufeinanderfolgen Rahmen von 7 Bytes bis zum Ende der Mitteilung durchgeführt wird.
